# EUROPÄISCHE PATENTANMELDUNG

(11) **EP 3 748 193 A2**
(43) Veröffentlichungstag der Anmeldung: **09.12.2020**
(21) Anmeldenummer: 20176190.5
(22) Anmeldetag: 22.05.2020
(51) Int. Cl.: F16H 7/08, F16H 7/12

(54) **SPANNANORDNUNG MIT SPANNROLLE UND VORRICHTUNG ZUM EINSTELLEN EINER SPANNANORDNUNG**

(30) Priorität: 07.06.2019 DE 102019115628
(71) Anmelder: Muhr und Bender KG, 57439 Attendorn (DE)
(72) Erfinder: Goldfisch, Andre, 57586 Weitefeld (DE); Stadermann, Florian, 57439 Attendorn (DE); Jud, Joachim, 57567 Daaden (DE)
(74) Vertreter: Neumann Müller Oberwalleney & Partner Patentanwälte

(57) **Zusammenfassung**

Die Erfindung betrifft eine Spannanordnung für einen Zugmitteltrieb, umfassend: einen Grundkörper (3); zumindest einen Spannarm (4, 6), der relativ zum Grundkörper (3) um eine Schwenkachse (A4, A6) schwenkbar gelagert ist; eine Spannrolle (5, 6), die mittels eines Lagers (16) um eine Drehachse (A5, A6) drehbar mit einem Trägerelement (12, 13) des zumindest einen Spannarms (4, 6) verbunden ist; und einen Einstellmechanismus (11), der ausgestaltet ist, das Lager (16) relativ zum Trägerelement (12, 13) in einem Schwenkbereich (a) zu verschwenken und in einer Schwenkposition (P) innerhalb des Schwenkbereichs (a) zu fixieren. Die Erfindung betrifft ferner eine entsprechende Vorrichtung zum Einstellen einer solchen Spannanordnung.

## Beschreibung

Die Erfindung betrifft eine Spannanordnung für einen Zugmitteltrieb.

Ein Zugmitteltrieb umfasst üblicherweise ein endloses Zugmittel und zumindest zwei Antriebsscheiben, von denen eine als Antrieb und eine als Abtrieb des Zugmitteltriebs fungieren kann. Derartige Zugmitteltriebe kommen beispielsweise an Verbrennungsmotoren eines Kraftfahrzeugs zum Antreiben von Nebenaggregaten zum Einsatz, wobei eine erste Antriebsscheibe auf der Kurbelwelle des Verbrennungsmotors sitzt und das Zugmittel antreibt. Weitere Antriebsscheiben sind den Nebenaggregaten zugeordnet, wie beispielsweise Wasserpumpe, Lichtmaschine oder Klimaanlagenkompressor, und werden vom Zugmittelantrieb drehend angetrieben. Bei herkömmlichen Zugmitteltrieben sind die Nebenaggregate als Verbraucher ausgelegt, das heißt sie werden von der Antriebsscheibe der Kurbelwelle über das Zugmittel angetrieben. Dabei ist zwischen der Kurbelwelle und dem in Umlaufrichtung des Zugmittels benachbarten Aggregat, in der Regel der Generator, das Lostrum ausgebildet. Um hier eine ausreichende Umschlingung des Zugmittels um die Antriebsscheibe zu gewährleisten, wird das Zugmittel mittels einer Spannrolle der Spannanordnung vorgespannt.

Je nach Anordnung der in einem solchen Zugmitteltrieb vorhandenen Aggregate (Generator, Wasserpumpe, Klima-Kompressor) kann ein Zugmittel mehr oder weniger sensibel auf eine Fehlstellung an einer Antriebsscheibe reagieren. Dies gilt insbesondere für die Antriebsscheibe im Trum vor dem Einlauf in einen Generator. Dabei kann es zu einem ungewünschten axialen Laufverhalten des Zugmittels kommen, was zu negativen Auswirkungen, wie Zugmittelverschleiß oder Geräuschen führen kann.

Aus der DE 10 2011 088 213 A1 ist eine Spannanordnung für einen Zugmitteltrieb eines Aggregatetriebs einer Brennkraftmaschine bekannt. Die Spannanordnung umfasst mehrere über ein Zugmittel antriebsmäßig verbundene Scheiben, von denen eine mit einem Aggregat der Brennkraftmaschine verbunden ist. Beidseitig der mit dem Aggregat verbundenen Scheibe sind zwei Spannelemente angeordnet, welche an einem gemeinsamen Hebel gelagert sind. Die Spannelemente werden über den Hebel mittels einer Spanneinheit jeweils gegen das Zugmittel vorspannt. Um zu starke Beanspruchungen des Zugmittels durch axiales Wandern zu verhindern, welches aufgrund von Schiefstellungen zwischen Spannelement und Scheibe auftreten kann, ist eine das Zugmittel führende Rolle des Spannelements ballig ausgeführt und um eine Hochachse kippbar oder axial beweglich im Hebel gelagert.

Aus der WO 2018/178143 A1 ist eine Spannvorrichtung für einen Zugmitteltrieb bekannt. Die Spannvorrichtung umfasst einen Grundkörper, einen Spannarm mit einem Lagerträger und einer Spannrolle, der relativ zum Grundkörper schwenkbar gelagert ist, und Federmittel zum Beaufschlagen des Spannarms. Es ist eine Verstellvorrichtung zum Verstellen einer Federabstützung relativ zum Lagerträger der Spannrolle vorgesehen.

Aus der DE 10 2015 111 809 A1 ist eine Spannvorrichtung für ein Zugmittel bekannt, das ein Aufnahmegehäuse, einen Rollenträger mit einer Spannrolle, eine Lageranordnung, mit welcher der Rollenträger in dem Aufnahmegehäuse um eine Drehachse drehbar gelagert ist, sowie eine Schraubenzugfeder, die an dem Aufnahmegehäuse und dem Rollenträger jeweils in Umfangsrichtung und in axiale Richtung abgestützt ist, aufweist.

Der vorliegenden Erfindung liegt die Aufgabe zugrunde, eine Spannanordnung vorzuschlagen, die ein gutes Laufverhalten des Zugmittels auf der Spannrolle ermöglicht und eine lange Lebensdauer aufweist. Die Aufgabe liegt weiter darin, eine entsprechende Einstellvorrichtung vorzuschlagen, mit der eine solche Spannanordnung einstellbar ist.

Zur Lösung wird eine Spannanordnung für einen Zugmitteltrieb vorgeschlagen, umfassend: einen Grundkörper; zumindest einen Spannarm, der relativ zum Grundkörper um eine Schwenkachse schwenkbar gelagert ist; eine Spannrolle, die mittels eines Lagers um eine Drehachse drehbar mit einem Trägerelement des zumindest einen Spannarms verbunden ist; und einen Einstellmechanismus, der ausgestaltet ist, das Lager relativ zum Trägerelement in einem Schwenkbereich zu verschwenken und in einer Schwenkposition innerhalb des Schwenkbereichs zu fixieren.

Ein Vorteil der Spannanordnung liegt darin, dass das Lager beziehungsweise die hiermit drehbar gelagerte Spannrolle mittels des Einstellmechanismus relativ zum Trägerelement beziehungsweise dem Grundkörper der Spannanordnung eingestellt werden kann. Es kann auf einfache und kostengünstige Weise ein definierter Schiefstand der Spannrolle relativ zum Rollenträger beziehungsweise Grundkörper erreicht werden, wobei der Schiefstand auch null betragen kann. Die definierte Ausrichtung beziehungsweise der definierte Schiefstand können in sehr engen Toleranzen eingehalten werden, so dass sich bei Betrieb der Spannanordnung eine hohe Lagegenauigkeit der Spannrolle relativ zum Zugmittel ergibt. Die definierte Ausrichtung beziehungsweise der definierte Schiefstand kann auch eine Vorverkippung innerhalb der engen Toleranzen beinhalten.

Die Spannanordnung dient zum Spannen eines Zugmittels eines Zugmitteltriebs. Der Zugmitteltrieb ist zur Drehmomentübertragung zwischen zwei oder mehr Wellen mit Hilfe des endlosen Zugmittels ausgestaltet. Insbesondere kann der Zugmitteltrieb in Form eines Riementriebs, Zahnriementriebs oder Kettentriebes gestaltet sein. Entsprechend kann die Spannanordnung in Form einer Riemenspannanordnung oder Kettenspannanordnung gestaltet sein.

Mithilfe des Einstellmechanismus lässt sich die Spannrolle gegenüber dem Trägerelement innerhalb eines definierten Einstellbereichs einstellen und fixieren. Dabei ist insbesondere vorgesehen, dass das Spannrollen-Lager mit seiner Drehachse gegenüber einer Trägerachse (A12) des Trägerelements in einem begrenzten Schwenkbereich verschwenkt werden kann. Der Schwenkbereich beziehungsweise Schwenkwinkel (a), um den das Lager der Spannrolle, beziehungsweise dessen Drehachse (A5), relativ zum Trägerelement, beziehungsweise einer Trägerachse (A12) schwenkbar ist, beträgt vorzugsweise maximal bis zu ± 1° (α = ± 1°)Die Trägerachse (A12) verläuft insbesondere parallel zur Schwenkachse (A4, A6) des Spannarms durch den Lagermittelpunkt (C) des Spannrollenlagers. Durch die Begrenzung des Schwenkwinkelbereichs (a) kann einer Fehljustierung oder einem Ausfall bei gelöstem Einstellmechanismus vorgebeugt werden.

Der Einstellmechanismus ist insbesondere so gestaltet, dass die Spannrolle zumindest in einer Schwenkebene (Ea) schwenkbar ist, die in Axialansicht auf die Trägerachse (A12) innerhalb eines Winkelbereichs (β) von bis zu ± 30° um die Trägerachse (A12) relativ zu einer Tangentenebene (T) liegt. Dabei kann die Tangentenebene (T) definiert werden als eine senkrechte Ebene zum Radius (R), der sich von der Schwenkachse (A4) zur Trägerachse (A12) beziehungsweise zum Lagermittelpunkt (C) erstreckt. Es versteht sich, dass der Einstellmechanismus auch so gestaltet sein kann, dass die Drehachse (A5) relativ zur Trägerachse (A12) - in Axialansicht auf die Trägerachse (A12) - auch innerhalb größerer Winkelbereiche (β) verschwenkt werden kann, insbesondere auch in jede Schwenkrichtung rund um die Trägerachse (A12), das über 360° um die Trägerachse.

Nach einer Ausführungsform kann der Einstellmechanismus eine Lageraufnahme umfassen, in der das Lager aufgenommen ist, ein Stützelement, gegen welche die Lageraufnahme axial abgestützt ist, und ein Spannelement zum Verspannen der Lageraufnahme gegen das Stützelement. Die Lageraufnahme ist im unverspannten Zustand des Spannelements relativ zum Stützelement verschwenkbar, so dass das Lager beziehungsweise die Spannrolle relativ zum Stützelement auf die gewünschte Position eingestellt werden kann. Durch anschließendes Verspannen mittels des Spannelements wird die Lageraufnahme beziehungsweise die darin gelagerte Spannrolle relativ zum Stützelement beziehungsweise dem Rollenträger in der gewünschten Position festgelegt.

Die Lageraufnahme kann auf der dem Trägerelement zugewandten Seite eine Kontaktfläche aufweisen, die mit einer Stützfläche des Stützelements in Anlage ist. Die Kontaktfläche der Lageraufnahme beziehungsweise die Stützfläche des Stützelements sind so gestaltet, dass die Lageraufnahme in verschiedenen Positionen relativ zum Stützelement verschwenkbar und in Anlage bringbar ist. Insbesondere kann zumindest eine von der Kontaktfläche und der Stützfläche kugelig ausgebildet sein, wobei vorzugsweise beide Flächen kugelig gestaltet sind. Die Stützfläche ist vorzugsweise konkav gestaltet, während die Kontaktfläche vorzugsweise konvex gestaltet ist.

Die Lageraufnahme kann auf der dem Trägerelement abgewandten Seite eine Druckfläche aufweisen, die mit einer Spannfläche des Spannelements in Anlage bringbar beziehungsweise von dieser beaufschlagbar ist. Auch hier gilt insbesondere, dass die Druckfläche der Lageraufnahme beziehungsweise die Spannfläche des Spannelements so gestaltet sind, dass die Lageraufnahme in verschiedenen Positionen relativ zum Spannelement verschwenkbar und von diesem beaufschlagbar ist. Insbesondere kann zumindest eine von der Druckfläche und der Spannfläche kugelig ausgebildet sein, wobei vorzugsweise beide Flächen kugelig gestaltet sind.

Nach einer ersten Möglichkeit kann das Lager relativ zum Trägerelement um einen Drehpunkt schwenkbar sein, der innerhalb der axialen Erstreckung des Lagers liegt. In diesem Fall sind die Druckfläche vorzugsweise konvex, und die Kontaktfläche vorzugsweise konkav gestaltet. Ferner kann ein Radius der kugeligen Fläche (Druckfläche und/oder Kontaktfläche) kleiner sein, als ein größter Außenradius der Spannrolle, insbesondere kleiner als ein größter Außenradius des Lagers. Nach einer günstigen Ausgestaltung sind die Flächenpaarungen so gestaltet, dass sich insgesamt ein kugeliger Aufbau der Lageraufnahme ergibt, wobei der sich durch die Flächenpaarungen ergebende Drehpunkt vorzugsweise in der Lagermittelebene liegt.

Nach einer zweiten Möglichkeit kann das Lager relativ zum Trägerelement um einen Drehpunkt schwenkbar ist, der außerhalb der axialen Erstreckung des Lagers liegt, insbesondere auf einer in Bezug auf eine Lagermittelebene zum Grundkörper entgegengesetzten Seite. In diesem Fall sind die Druckfläche vorzugsweise konkav, und die Kontaktfläche vorzugsweise konvex gestaltet. Ferner kann ein Radius der kugeligen Fläche (Druckfläche und/oder Kontaktfläche) größer sein, als ein größter Außenradius des Lagers, insbesondere größer als ein größter Außenradius der Spannrolle. Nach einer günstigen Ausgestaltung sind die Flächenpaarungen so gestaltet, dass sich insgesamt ein doppel-kugeliger Aufbau der Lageraufnahme ergibt, wobei der sich durch die Flächenpaarungen ergebende Drehpunkt vorzugsweise mit axialem Versatz zur Spannrolle liegt.

Nach einer Weiterbildung kann die Lageraufnahme zweiteilig gestaltet sein, und ein erstes Lageraufnahmeteil aufweisen, welches das Lager an einem ersten axialen Ende aufnimmt, und ein zweites Lageraufnahmeteil, welches das Lager an einem zweiten axialen Ende aufnimmt. Das erste und das zweite Lageraufnahmeteil sind gegenüber dem Stützelement beziehungsweise Spannelement begrenzt verschwenkbar und in der gewünschten Schwenkposition mittels des Spannelements axial gegeneinander verspannbar.

Die Lageraufnahme kann eine zentrale Bohrung aufweisen, durch welche sich das Spannelement hindurch erstreckt, wobei das Spannelement gegenüber einer Bohrungswandung Radialspiel aufweist. Bei einem zweiteiligen Aufbau der Lageraufnahme weisen vorzugsweise beide Lageraufnahmeteile eine Durchgangsbohrung auf, durch die das Spannelement durchgesteckt und mit dem Trägerelement verspannt wird.

Das Spannelement wird insbesondere lösbar mit dem Trägerelement verspannt, beispielsweise mittels einer Schraubverbindung. Hierfür kann eines von dem Spannelement und dem Trägerelement eine Schraube mit einem Außengewinde umfassen, und das andere von dem Spannelement und dem Trägerelement kann eine Mutter mit einem zum Schraubgewinde passenden Innengewinde aufweisen.

Die Spannanordnung kann als Einarmspanner oder Zweiarmspanner gestaltet sein. Bei einem Einarmspanner ist genau ein Spannarm vorgesehen, der in Umfangsrichtung über Federmittel an dem Grundkörper federnd abgestützt ist. Bei dieser Ausführungsform ist ein Federende am Spannarm und das andere Federende am Grundkörper in Umfangsrichtung abgestützt, so dass der Spannarm in eingebautem Zustand eine federnde Vorspannkraft an einer Stelle auf das Zugmittel ausüben kann.

Ein Zweiarmspanner hat zwei Spannarme, nämlich einen ersten Spannarm mit einer ersten Spannrolle und einen zweiten Spannarm mit einer zweiten Spannrolle, wobei die beiden Spannarme über Federmittel gegeneinander in Umfangsrichtung abgestützt sind. Der zweite Spannarm beaufschlagt das Zugmittel mit der zweiten Spannrolle. Die beiden Spannarme können gegeneinander beziehungsweise gegenüber dem Grundkörper um eine jeweils eigene oder eine gemeinsame Schwenkachse schwenkbar gelagert sein. Bei dieser Ausführungsform mit zwei Spannarmen ist ein erstes Federende in Umfangsrichtung am ersten Spannarm, und ein zweites Federende am zweiten Spannarm in Umfangsrichtung abgestützt, so dass die beiden Spannarme über die Federmittel in Umfangsrichtung relativ zueinander federnd abgestützt sind.

Zweiarmspanner kommen in Riementrieben zum Einsatz, bei denen ein Startergenerator als ein Nebenaggregat in den Riementrieb integriert ist, das heißt ein Elektromotor, der je nach Betriebszustand als Starter (Anlasser) oder Lichtmaschine (Generator) betrieben werden kann. Im Normal- oder Motorbetrieb ist die Riemenscheibe an der Kurbelwelle die treibende Scheibe, während der Startergenerator wie auch die übrigen Aggregate angetrieben werden. Im Start- oder Anlasserbetrieb treibt der Startergenerator über die zugehörige Riemenscheibe die Kurbelwelle an, um den Verbrennungsmotor zu starten. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums und damit zwei Spannarme vorzusehen, von denen jeweils eine am Lostrum unter Federkraft wirksam wird, während die andere vom gespannten Zugtrum zurückgedrängt wird.

Die Aufgabe wird weiter gelöst durch eine Vorrichtung zum Einstellen einer Spannanordnung, die nach einer oder mehrerer der oben genannten Ausführen gestaltet sein kann, umfassend: eine Basisplatte, eine Halteinrichtung zum Fixieren der Spannanordnung an der Basisplatte, und ein Ausrichteelement, die mit der Basisplatte verbunden ist und mindestens eine Ausrichtefläche aufweist, gegen welche die Spannrolle in aufgespanntem Zustand der Spannanordnung in Anlage bringbar ist.

Mit der genannten Vorrichtung kann die Spannrolle relativ zum Trägerelement beziehungsweise zum Grundkörper der Spannanordnung auf einfache Weise in die gewünschte Position eingestellt und in dieser fixiert werden. Das Ausrichteelement der Einstellvorrichtung kann zu Beginn einmalig in die für die gewünschte Schwenkposition der Spannrolle erforderliche Lage eingestellt werden. Durch Aufsetzen der Spannanordnung auf der Halteeinrichtung und Anlegen der Spannrolle gegen die Ausrichtefläche unter Federvorspannung wird die Spannrolle in die gewünschte Position verschwenkt. Durch anschließendes Verspannen der Spannrolle am Trägerelement wird die Anordnung in dieser Position fixiert.

Nach einer bevorzugten Ausführungsform weist das Ausrichteelement mindestens zwei in Umfangsrichtung der Spannrolle versetzt zueinander angeordnete Ausrichteflächen auf. Auf diese Weise wird eine sichere Abstützung in einer zur Lagerachse parallelen Ebene erreicht. Alternativ oder ergänzend weist das Ausrichteelement mindestens zwei in axiale Richtung der Spannrolle versetzt zueinander angeordnete Ausrichteflächen auf. Auf diese Weise wird eine sichere Abstützung in einer zur Lagerachse parallelen Ebene erreicht.
- Figur 1A: eine erfindungsgemäße Spannanordnung in einer ersten Ausführungsform in perspektivischer Darstellung;
- Figur 1B: eine Rolleneinheit der Spannanordnung aus Figur 1A im Längsschnitt in einer ersten Einstellposition der Rollenachse;
- Figur 1C: eine Rolleneinheit der Spannanordnung aus Figur 1A im Längsschnitt in einer zweiten Einstellposition der Rollenachse;
- Figur 2: eine Rolleneinheit für eine erfindungsgemäße Spannanordnung in einer abgewandelten Ausführungsform im Längsschnitt;
- Figur 3: eine Rolleneinheit für eine erfindungsgemäße Spannanordnung in einer weiteren Ausführungsform im Längsschnitt;
- Figur 4: einen Riementrieb mit einer erfindungsgemäßen Spannanordnung;
- Figur 5A: eine erfindungsgemäße Spannanordnung in einer zweiten Ausführungsform in perspektivischer Ansicht;
- Figur 5B: eine Rolleneinheit der Spannanordnung aus Figur 5A im Längsschnitt in einer ersten Einstellposition der Rollenachse;
- Figur 5C: eine Rolleneinheit der Spannanordnung aus Figur 5A im Längsschnitt in einer zweiten Einstellposition der Rollenachse;
- Figur 6: schematisch eine Spannanordnung in Axialansicht mit besonderer Darstellung der Geometrien;
- Figur 7: eine erfindungsgemäße Einstellvorrichtung zum Einstellen einer erfindungsgemäßen Spannanordnung gemäß einer der Figuren 1 bis 4, in einer ersten Ausführungsform;
- Figur 8: eine erfindungsgemäße Einstellvorrichtung zum Einstellen einer erfindungsgemäßen Spannanordnung gemäß einer der Figuren 1 bis 4, in einer zweiten Ausführungsform;
- Figur 9: eine erfindungsgemäße Einstellvorrichtung zum Einstellen einer erfindungsgemäßen Spannanordnung gemäß Figur 5.

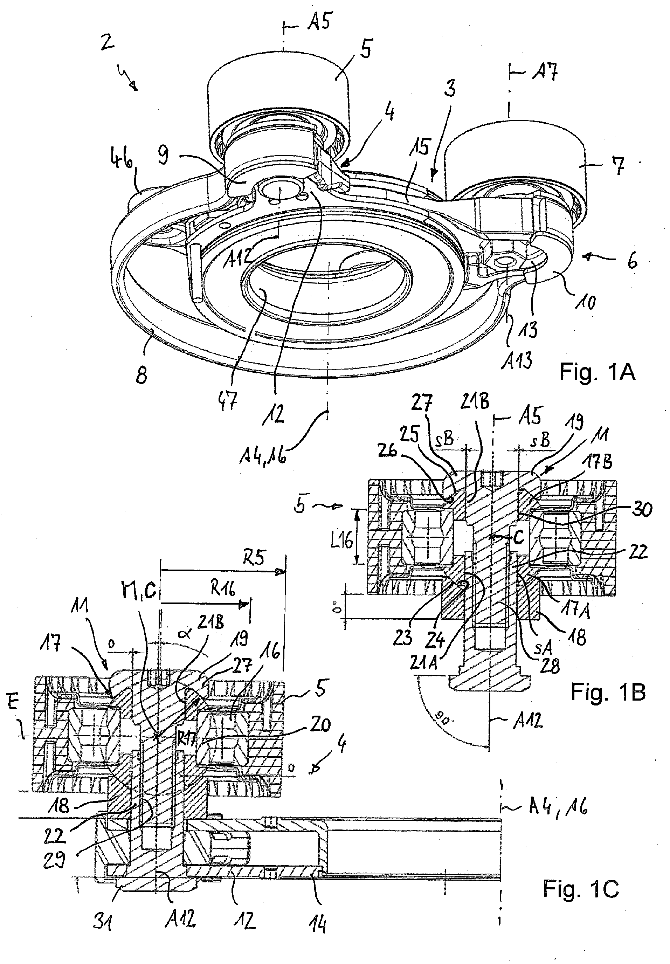

Die Figuren 1A bis 1C, welche im Folgenden gemeinsam beschrieben werden, zeigen eine erfindungsgemäße Spannanordnung 2 in einer ersten Ausführungsform. Die Spannanordnung 2 umfasst einen Grundkörper 3, einen ersten Spannarm 4 mit einer ersten Spannrolle 5, einen zweiten Spannarm 6 mit einer zweiten Spannrolle 7 und eine Feder 8, über welche die beiden Spannarme 4, 6 in Umfangsrichtung gegeneinander federnd abgestützt sind. Die Feder 8 erstreckt sich zwischen einer ersten Federabstützung 9 des ersten Spannarms 4 und einer zweiten Federabstützung 10 des zweiten Spannarms 6 in Umfangsrichtung um eine Achse A der Spannanordnung.

Der Grundkörper 3 kann an einem ortsfesten Bauteil wie einem Aggregat befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 3 Befestigungselemente 46, die insbesondere in Form von nach radial außen vorstehende Flanschvorsprüngen mit Bohrungen gestaltet sein können, durch die Schrauben zur Befestigung an dem ortsfesten Bauteil durchgesteckt werden können.

Die beiden Spannarme 4, 6 der Spannanordnung 2 sind über entsprechende Lagermittel gegeneinander beziehungsweise gegenüber dem Grundkörper 3 um eine Schwenkachse A4, A6 drehbar gelagert. Der Grundkörper 3, der erste Spannarm 4 und/oder der zweite Spannarm 6 können als Stahlbauteile, die insbesondere umformend aus Blech hergestellt werden können, oder Leichtmetallbauteile, insbesondere aus einer Aluminiumgusslegierung, oder aus Kunststoff, insbesondere einem faserverstärkten Kunststoff, hergestellt sein.

Der erste Spannarm 4 ist mittels eines ersten Lagers um eine erste Schwenkachse A4 schwenkbar gelagert. Der zweite Spannarm 6 ist mittels eines zweiten Lagers um eine zweite Schwenkachse A6 schwenkbar gelagert. Vorliegend sind die beiden Lager koaxial zueinander angeordnet, das heißt die beiden Schwenkachsen A4, A6 fallen zusammen. Grundsätzlich ist es jedoch für bestimmte Anwendungen auch denkbar, dass die beiden Schwenkachsen parallel beziehungsweise exzentrisch zueinander angeordnet sein können.

Die sich in Umfangsrichtung um die Schwenkachsen A4, A6 erstreckende Feder 8 wirkt einer relativen Schwenkbewegung der beiden Spannarme 4, 6 entgegen. Die beiden Spannarme 4, 6 sind durch die zwischengeschaltete Feder 8 relativ zueinander begrenzt drehbar und können zusammen mit der Feder 8 gegenüber dem Grundkörper 3 um die Achsen A4, A6 frei drehen, das heißt um 360° und mehr. Es ist vorgesehen, dass die Schwenkachsen A4, A6 in montiertem Zustand der Spannanordnung 2 innerhalb der Öffnung 47 des Grundkörpers 3 liegen.

Die Spannarme 4, 6 haben jeweils ein Trägerelement 12, 13, das von einem ringförmigen Abschnitt 14, 15 des jeweiligen Spannarms 4, 6 nach radial außen vorsteht. An dem Trägerelement 12, 13 ist jeweils eine zugehörige Spannrolle 5, 7 befestigt und mittels entsprechender Lager 16 um zu den Schwenkachsen A4, A6 zumindest im Wesentlichen parallele Drehachsen A5, A7 drehbar gelagert.

Erfindungsgemäß ist zumindest einer der beiden Spannarme 4, 6 mit einem Einstellmechanismus 11 versehen, um das Spannrollen-Lager 16 relativ zum zugehörigen Trägerelement 12, 13 in einem Schwenkbereich zu verschwenken und in einer Schwenkposition innerhalb des Schwenkbereichs zu fixieren. Hierfür kann das Spannrollen-Lager 16 mit seiner Drehachse A5, A7 gegenüber einer Trägerachse A12, A13 des Trägerelements 12, 13 in einem begrenzten Schwenkbereich α verschwenkt werden. Der Schwenkbereich α beträgt vorzugsweise bis zu maximal ± 1° (α ≤ ± 1°) um die Achse A12, A13 des Trägerelements beziehungsweise um die Schwenkachse A4, A6 des Spannarms.

Der Einstellmechanismus 11 weist eine Lageraufnahme 17 für das Lager 16 auf, ferner ein Stützelement 18 zum Abstützen der Lageraufnahme 17 in Richtung Trägerelement 12, 13, und ein Spannelement 19 zum Verspannen der Lageraufnahme 17 gegen das Stützelement 18. Die Lageraufnahme 17 ist in gelöstem beziehungsweise unverspanntem Zustand des Spannelements 19 relativ zum Stützelement 18 verschwenkbar beziehungsweise drehbar, so dass das Lager 16 beziehungsweise die damit verbundene Spannrolle 5, 7 relativ zum Stützelement 18 auf die gewünschte Position eingestellt werden kann. Durch anschließendes Verspannen der Anordnung mittels des Spannelements 19 wird die Lageraufnahme 17 und die hierin drehbar gelagerte Spannrolle 5, 7 relativ zum Stützelement 18 beziehungsweise dem Trägerelement 12, 13 in der gewünschten Position festgelegt.

Die Lageraufnahme 17 ist vorliegend zweiteilig gestaltet und umfasst ein erstes Lageraufnahmeteil 17A, welches einen Lagerinnenring 20 des Lagers 16 an einem ersten axialen Ende aufnimmt, und ein zweites Lageraufnahmeteil 17B, welches den Lagerinnenring 20 an einem zweiten axialen Ende aufnimmt. In unverspanntem Zustand sind die beiden Lageraufnahmeteile 17A, 17B relativ zum Stützelement 18 beziehungsweise Spannelement 19 verschwenkbar. In der gewünschten Schwenkposition der Spannrolle 5, 7 relativ zum jeweiligen Trägerelement 12, 13 wird das Spannelement 19 gegen das Stützelement 18 mit zwischengeschalteter Lageraufnahme 17 verspannt, so dass die Ausrichtung der Spannrolle festgelegt ist. Diese Einstellposition bleibt bei Betrieb der Spannanordnung in einem Riementrieb erhalten, so dass der Riemen an der eingestellten Spannrolle gleichmäßig anliegt und sicher geführt ist.

Die Lageraufnahme 17 beziehungsweise die beiden Aufnahmeteile 17A, 17B haben eine zentrale Bohrung 21A, 21B, durch welche sich das Spannelement 19 hindurch erstreckt. Wie insbesondere in Figur 1B erkennbar, welche das Lager 16 in koaxialer Anordnung zur Trägerachse A12 zeigt, ist zwischen der Bohrung 21A des Lageraufnahmeteils 17A und einem hierzu radial innen angeordneten Teil 22 ein Radialspiel sA vorgesehen. Alternativ oder ergänzend ist zwischen dem Spannelement 19 und der Bohrung 21B des Aufnahmeteils 17B rundherum ein Radialspiel sB vorgesehen. Das Radialspiel sA, sB kann rundherum beispielsweise zwischen 0,1 mm und 0,3 mm betragen. Durch das Radialspiel sA, sB wird ermöglicht, dass das jeweilige Aufnahmeteil 17A, 17B relativ zum Spannelement 19 beziehungsweise dem Teil 22 in begrenztem Umfang verschwenkt werden kann. In Figur 1C ist eine zweite Spannposition gezeigt, in welcher die Lageraufnahme 17 gegenüber der Trägerachse A12 beziehungsweise einer Parallelen zur Schwenkachse A4 um einen Schwenkwinkel α verschwenkt ist. Der Schwenkwinkel α ist vorzugsweise kleiner oder gleich 1° relativ zur Achse A12, die insbesondere parallel zur Schwenkachse A4 verläuft. Bei weiterem Verschwenken der Lageraufnahme 17 kommt diese in Anlage mit dem Spannelement 19 beziehungsweise dem Hülsenabschnitt 22, so dass auf diese Weise ein Schwenkanschlag gebildet ist.

Die Lageraufnahme 17 beziehungsweise das Lageraufnahmeteil 17A hat auf der dem Trägerelement 12 zugewandten Seite eine Kontaktfläche 23, die mit einer Stützfläche 24 des Stützelements 18 in Anlage ist. Die durch die Kontaktfläche 23 und Stützfläche 24 gebildete Flächenpaarung ist so gestaltet, dass die Lageraufnahme 17A in verschiedenen Positionen relativ zum Stützelement 18 verschwenkbar und in Anlage bringbar ist. Hierfür ist die Kontaktfläche 23 insbesondere kugelig beziehungsweise konvex ausgebildet, und die Stützfläche 24 ist insbesondere hohlkugelig beziehungsweise konkav ausgebildet.

Die Lageraufnahme 17B auf der dem Trägerelement 12 abgewandten Seite weist eine Druckfläche 25 auf, die mit einer Spannfläche 26 des Spannelements 19 in Anlage bringbar und von dieser beaufschlagbar ist. Auch hier gilt insbesondere, dass die durch die Druckfläche 25 und die Spannfläche 26 gebildete Flächenpaarung so gestaltet ist, dass die Lageraufnahme 17B in verschiedenen Positionen relativ zum Spannelement 19 verschwenkbar und von diesem beaufschlagbar ist. Hierfür ist die Druckfläche 25 insbesondere kugelig beziehungsweise konvex ausgebildet, und die Spannfläche 26 insbesondere hohlkugelig beziehungsweise konkav ausgebildet.

Insgesamt ergibt sich durch die kugelige Kontaktfläche 23 des unteren Lageraufnahmeteils 17A und die kugelige Druckfläche 25 des oberen Lageraufnahmeteils 17B eine insgesamt kugelige Form der Lageraufnahme 17, so dass im Zusammenwirken mit dem Stützelement 18 und dem Spannelement 19 eine Art Kugelgelenk gebildet ist.

Die Flächenpaarungen 23, 24; 25, 26 sind bei der vorliegenden Ausführungsform so gestaltet, dass die Lageraufnahme 17 relativ zum Teil 22 beziehungsweise zum Trägerelement 12 um einen Drehpunkt M schwenkbar ist. Der Drehpunkt M liegt innerhalb der axialen Erstreckung des Lagers 16, insbesondere in der Lagermittelebene E. Dabei ist der Radius R17 der kugeligen Außenflächen 23, 25 der Lageraufnahme 17 und/oder der kugeligen Innenflächen 24, 26 kleiner, als ein größter Außenradius R5 der Spannrolle 5, insbesondere kleiner als ein größter Außenradius R16 des Lagers 16.

Das Spannelement 19 ist vorliegend in Form einer Spannschraube gestaltet, die lösbar mit dem am Trägerabschnitt 12 abgestützten Teil 22 verspannbar ist. Entsprechend weist das Spannelement 19 einen Kopfabschnitt 27 zum Abstützen gegen die Lageraufnahme 17 und einen Gewindeabschnitt 28 zum Verschrauben mit dem Teil 22. Das Teil 22 hat einen Hülsenabschnitt mit einem Innengewinde 29, in das das Spannelement mit seinem Außengewinde eingeschraubt ist. Der Kopfabschnitt 27 des Spannelements 19 weist an seiner Innenseite die Spannfläche 26 auf und hat an seiner Außenseite eine Eingriffskontur zur Einleitung eines Drehmoments mittels eines Werkzeugs. Ferner weist das Spannelement 19 einen an den Kopfabschnitt 27 anschließenden Zylinderabschnitt 30 auf, der in der Durchgangsbohrung 21B des Lageraufnahmeteils 17B mit Radialspiel einsitzt. Das Teil 22 ist mit einem Kopfabschnitt 31 gegen den Trägerabschnitt 12 des Spannarms axial abgestützt. Das Stützelement 18 ist ringförmig gestaltet und koaxial um das Teil 22 angeordnet. Das Stützelement 18 ist von dem Spannelement 19 und dem Teil 22 zwischen der Lageraufnahme 17 und dem Trägerabschnitt 12 des Spannarms axial verspannt.

Je nach Anwendung und Einsatz der Spannanordnung 2 kann nur die erste Spannrolle 5, oder nur die zweite Spannrolle 6, oder beide Spannrollen 5, 6 mit einem erfindungsgemäßen Einstellmechanismus 11 versehen sein, wie er in den Figuren 1B und 1C gezeigt ist.

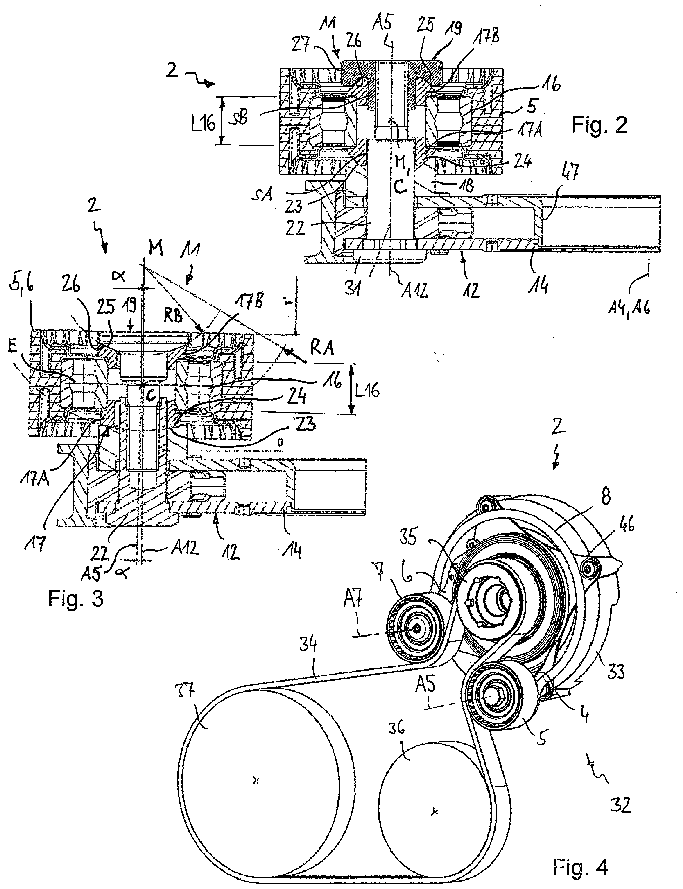

Die Figur 2 zeigt eine erfindungsgemäße Spannanordnung 2 in einer abgewandelten Ausführungsform. Die vorliegende Spannvorrichtung 2 nach Figur 2 entspricht weitestgehend der Ausführungsform gemäß Figur 1, so dass hinsichtlich der Gemeinsamkeiten auf die obige Beschreibung zu Figur 1 Bezug genommen wird. Dabei sind gleiche beziehungsweise abgewandelte Einzelheiten mit gleichen Bezugszeichen versehen, wie in den Figuren 1A bis 1C.

Der einzige Unterschied liegt in der Ausgestaltung des Spannelements 19 beziehungsweise des Teils 22, welche hier kinematisch umgekehrt gestaltet sind. Das Element 22 ist in Form eines Spannbolzens gestaltet, der durch den Spannarm 12 durchgesteckt und mit einem Kopfabschnitt 31 an diesem axial abgestützt ist. Entsprechend ist das Spannelement 19 in Form einer Spannmutter gestaltet, die mit einem Innengewinde in ein Außengewinde des Spannbolzens 22 eingreift. Der Kopfabschnitt 27 der Spannmutter 19 weist innen die Spannfläche 26 zum Beaufschlagen des Lagerteils 17B auf. Außen kann die Spannmutter eine Eingriffskontur zur Einleitung eines Drehmoments mittels eines Werkzeugs aufweisen. Wie schon bei der oben beschriebenen Ausführung können auch bei der vorliegenden Ausführung nach Figur 2 nur eine Spannrolle 5, 6, oder auch beide Spannrollen 5, 6 mit dem beschriebenen Einstellmechanismus 11 versehen sein. Es ist auch eine weiter abgewandelte Ausführungsform möglich, bei der ein Spannarm mit dem Einstellmechanismus gemäß Figur 1 und der andere Spannarm mit dem Einstellmechanismus gemäß Figur 2 versehen ist.

Die Figur 3 zeigt eine erfindungsgemäße Spannanordnung 2 in einer weiteren abgewandelten Ausführungsform. Die Spannvorrichtung 2 nach Figur 3 entspricht weitestgehend der Ausführungsform gemäß Figur 1, so dass hinsichtlich der Gemeinsamkeiten auf die obige Beschreibung zu Figur 1 Bezug genommen wird. Dabei sind gleiche beziehungsweise abgewandelte Einzelheiten mit gleichen Bezugszeichen versehen, wie in den Figuren 1A bis 1C.

Eine wesentliche Besonderheit liegt in der Ausgestaltung des Einstellmechanismus 11, welcher bei der Ausführung nach Figur 3 so gestaltet ist, dass die Spannrolle 5, 6 beziehungsweise das Lager 16 relativ zum Trägerelement 12 um einen Drehpunkt M schwenkbar ist, der außerhalb der axialen Erstreckung des Lagers 16 liegt. Es ist in Figur 3 erkennbar, dass der Drehpunkt M auf einer in Bezug auf eine Lagermittelebene E zum Trägerelement 12 entgegengesetzten Seite angeordnet ist. In diesem Fall sind die Druckfläche 25 des Lagerträgers 17B konvex, und die Spannfläche 26 konkav gestaltet. Ferner ist der Radius RB der kugeligen Flächen 25, 26 größer, als ein größter Außenradius des Lagers 16. Die Kontaktfläche 23 des Lagerträgers 17A ist konvex, und die Stützfläche 24 des Stützelements 18 ist konkav gestaltet, wobei der Radius RA der kugeligen Flächen 23, 24 größer ist, als der Radius RB der kugeligen Flächen 25, 26, insbesondere größer ist, als ein größter Außenradius der Spannrolle 5, 6. Es ergibt sich ein im Wesentlichen doppel-kugeliger Aufbau der Lageraufnahme 17A, 17B. Die vorliegende Ausführungsform ermöglicht einen besonders flachen Aufbau des oberen Lageraufnahmeteils 17B, so dass der benötigte axiale Bauraum insgesamt gering ist. Vorzugsweise liegt die Stirnseite des Spannelements 19 dabei innerhalb der Axialerstreckung der Spannrolle 5, 6.

Figur 4 zeigt eine erfindungsgemäße Spannanordnung 2 in einem eingebauten Zustand in einem Riementrieb 32. Hierfür wird die Spannanordnung 2 an einem ortsfesten Bauteil, vorliegend an ein Aggregat 33 angebracht, der Riemen 34 um alle Antriebsriemenscheiben 35, 36, 37 gelegt und die Spannrollen 5, 7 unter Federvorspannung gegen den Riemen 34 beaufschlagt. Das Aggregat 33 kann beispielsweise ein Generator (Lichtmaschine) sein. Die Spannanordnung 2 ist stirnseitig an dem Aggregat 33 angebracht. Dies erfolgt mittels der umfangsverteilten Befestigungsflansche 46, in welche Schrauben eingesteckt und mit dem Gehäuse des Aggregats verschraubt werden können. Die Spannanordnung 2 ist derart gestaltet, dass - in montiertem Zustand an das Aggregat 33 - die Schwenkachsen A4, A6 der Spannarme 4, 6 innerhalb des Außendurchmessers der Antriebsriemenscheibe 35 angeordnet sind.

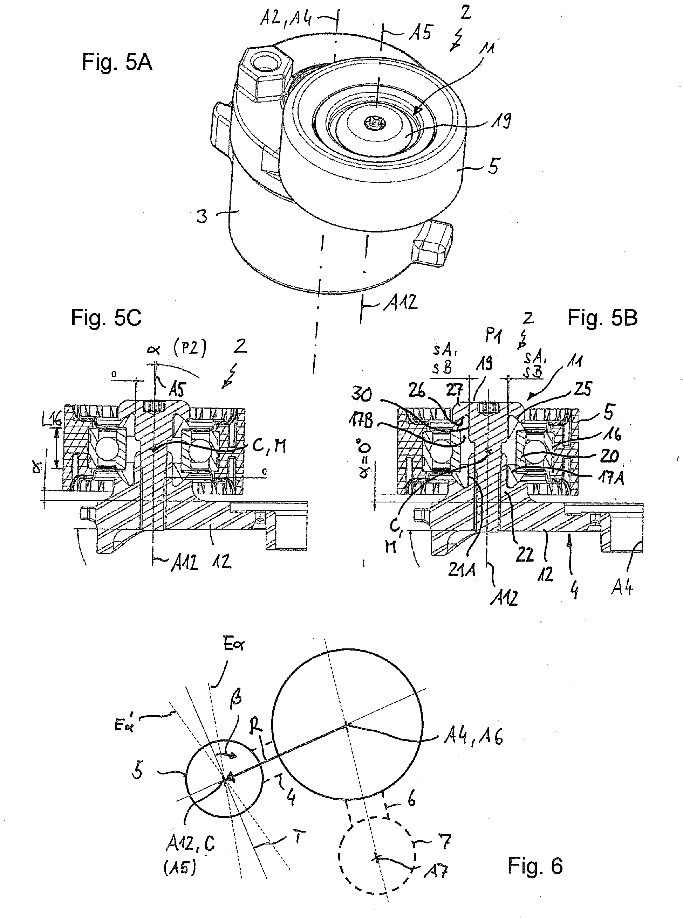

Die Figuren 5A bis 5C, gemeinsam auch als Figur 5 bezeichnet, zeigen eine erfindungsgemäße Spannanordnung 2 in einer weiteren Ausführungsform. Die vorliegende Spannanordnung 2 entspricht in weiten Teilen der Ausführungsform gemäß den Figuren 1A bis 1C, auf deren Beschreibung hinsichtlich der Gemeinsamkeiten abkürzend Bezug genommen wird. Dabei sind gleiche beziehungsweise abgewandelte Einzelheiten mit gleichen Bezugszeichen versehen, wie in den obigen Figuren.

Die Spannanordnung 2 gemäß der vorliegenden Ausführungsform hat nur einen einzigen Spannarm 4 mit entsprechender Spannrolle 5. Die erste Federabstützung ist, wie bei den obigen Ausführungsformen, dem einzigen Spannarm 4 zugeordnet. Die zweite Federabstützung ist dem Grundkörper 3 zugeordnet beziehungsweise an diesem ausgebildet. Die Feder ist innerhalb des Grundkörpers 3 angeordnet und nicht erkennbar.

Ein weiterer Unterschied besteht darin, dass das Teil 22, mit dem das Spannelement 19 verspannt ist, einteilig mit dem Trägerelement 12 ausgebildet ist. Das Trägerelement 12 des Spannarms 4 hat hierfür eine Bohrung mit einem Innengewinde, in welche das als Spannschraube gestaltete Spannelement 19 eingeschraubt ist. Der Spannarm beziehungsweise Trägerabschnitt 12 ist vorliegend als Massivteil, beispielsweise als Leichtmetallgussteil gestaltet.

Die Figur 5B zeigt das Lager 16 in einer ersten möglichen Stellposition P1 in koaxialer Anordnung zur Trägerachse A12, wobei zwischen der Bohrung 21A des Lageraufnahmeteils 17A und dem hierzu radial innen angeordneten Hülsenabschnitt 22 ein Radialspiel sA vorgesehen ist. Entsprechend ist zwischen der Bohrung 21B des Lageraufnahmeteils 17B und dem radial innen liegenden Zylinderabschnitt 30 ein Radialspiel sB vorgesehen. Das Radialspiel sA, sB kann beidseitig jeweils zwischen 0,1 mm und 0,3 mm liegen. In Figur 5C ist eine zweite Spannposition P2 gezeigt, in welcher die Lageraufnahme 17 gegenüber der Trägerachse A12 beziehungsweise einer Parallelen zur Schwenkachse A4 um einen Schwenkwinkel α verschwenkt ist. Der Schwenkwinkel α ist vorzugsweise kleiner oder gleich 1° relativ zur Achse A12 beziehungsweise A4. Bei weiterem Verschwenken der Lageraufnahme 17 kommt diese in Anlage mit dem Spannelement 19 beziehungsweise dem Hülsenabschnitt 22, so dass auf diese Weise ein Schwenkanschlag gebildet ist.

Hinsichtlich aller übrigen Einzelheiten zum Aufbau und Funktionsweise entspricht die Spannanordnung 2 gemäß den Figuren 5A bis 5C derjenigen gemäß den Figuren 1A bis 1C, auf deren Beschreibung hier abkürzend verwiesen wird.

Die Figur 6 zeigt schematisch eine erfindungsgemäße Spannanordnung 2, die nach einer der Ausführungsformen gemäß den Figuren 1 bis 4 als Zweiarmspanner oder gemäß Figur 5 als Einarmspanner gestaltet sein kann. Dabei ist eine Spannrolle (5) für eine Ausführung als Einarmspanner mit durchgezogener Line, und eine zweite Spannrolle (7) für eine Ausführung als Zweiarmspanner mit gestrichelter Linie gezeigt. Vorstehend werden die geometrischen Verhältnisse nur anhand des Spannarms 4 erläutert, wobei es sich versteht, dass diese alternativ oder ergänzend auch für den zweiten Spannarm 6 gelten können. Die Darstellung gemäß Figur 6 dient insbesondere der Erläuterung der geometrischen Zusammenhänge und gilt insbesondere für alle der oben beschriebenen Ausführungsformen. Dabei sind gleiche beziehungsweise einander entsprechende Einzelheiten mit gleichen Bezugszeichen versehen, wie in den obigen Figuren.

Die Spannrolle 5 ist mit ihrer Drehachse A5 relativ zur Trägerachse A12 des Trägerelements 12 verschwenkbar, wobei die Trägerachse A12 als Parallele zur Schwenkachse A4 des Spannarms durch den Lagermittelpunkt C des Spannrollenlagers 16 definiert werden kann. In unverschwenktem Zustand der Spannrolle 5 fallen die Drehachse (A5) und die Trägerachse A12 zusammen. In verschwenktem Zustand spannen die Drehachse und die Trägerachse A12 eine Schwenkebene Ea auf. Die Schwenkebene Ea kann in der gezeigten Axialansicht innerhalb eines Winkelbereichs β von bis zu ± 180° um die Trägerachse A12 relativ zu einer Tangentenebene T liegen. Die Tangentenebene T ist insbesondere eine senkrechte Ebene zum Radius R, der sich von der Schwenkachse A4 zum Lagermittelpunkt C erstreckt. Vorzugsweise ist die Drehachse A5 in der gezeigten Axialansicht zumindest innerhalb eines Winkelbereichs β von bis zu ± 30° relativ zur Tangentenebene T schwenkbar. Die genaue Ausrichtung der Drehachse A5 orientiert sich vorzugsweise je nach der konkreten Ausführungsform und Einbausituation an der Umschlingung der Spannrolle 5 durch den Riemen 34. Dabei liegt die Schwenkebene Ea vorzugsweise zumindest etwa in der winkelhalbierenden Ebene zwischen den beiden an die Spannrolle angrenzenden Riemenabschnitten. In Figur 6 sind beispielhaft zwei mögliche Positionen der Schwenkebene mit Ea und Ea' eingezeichnet, wobei jede beliebige andere Winkelposition (β) möglich ist.

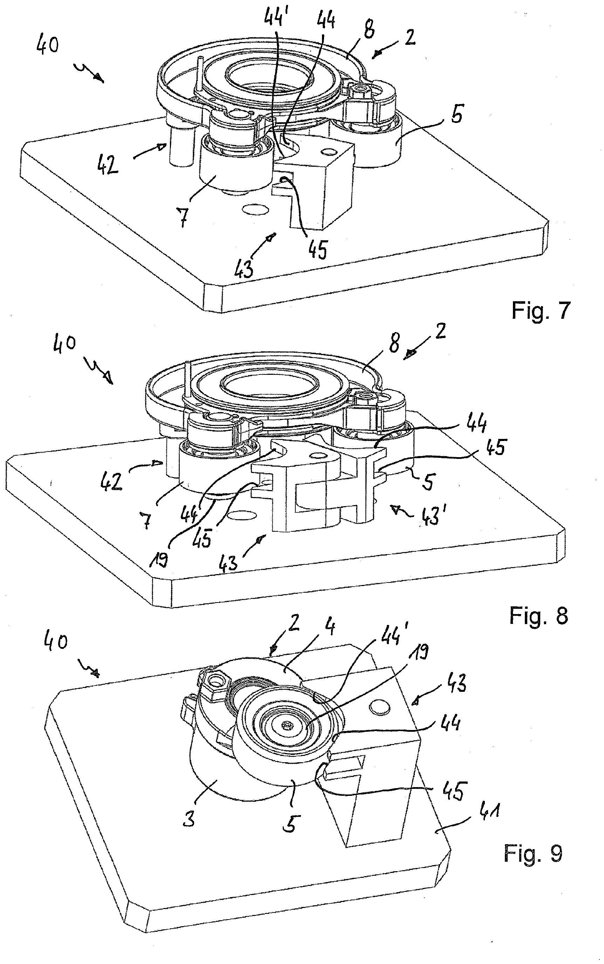

Figur 7 zeigt eine erfindungsgemäße Einstellvorrichtung 40 zum Einstellen der Spannanordnung gemäß einer der Figuren 1 bis 4. Die Einstellvorrichtung dient zum Einstellen des Schwenkwinkels für eine Spannanordnung 2, bei welcher nur eine Spannrolle mittels eines entsprechenden Einstellmechanismus 11 einstellbar ist.

Die Einstellvorrichtung 40 umfasst eine Basisplatte 41, eine Halteinrichtung 42 zum Fixieren der Spannanordnung 2 an der Basisplatte 41, und ein Ausrichteelement 43, das mit der Basisplatte 41 verbunden ist und mehrere Ausrichteflächen 44, 45 aufweist, gegen welche die Spannrolle 7 in aufgespanntem Zustand des Riemenspanners 2 in Anlage bringbar sind.

Die Vorrichtung 40 ermöglicht es, dass die Spannrolle 7 relativ zum Trägerelement 12 beziehungsweise zum Grundkörper 3 der Spannanordnung 2 auf einfache Weise in die gewünschte Position eingestellt und in dieser fixiert werden kann. Das Ausrichteelement 43 der Einstellvorrichtung 40 wird zu Beginn einmalig in die für die gewünschte Schwenkposition der Spannrolle 7 erforderliche Lage eingestellt beziehungsweise in der gewünschten Form bereitgestellt. Durch Aufsetzen der Spannanordnung 2 auf der Halteeinrichtung 42 und Anlegen der Spannrolle 7 gegen die Ausrichteflächen 44, 45 unter Federvorspannung wird die Spannrolle 7 in die gewünschte Position verschwenkt. Durch anschließendes Verspannen der Spannrolle 7 am Trägerelement 12 mittels des Spannelements 19 wird die Anordnung in dieser Position fixiert.

Das Ausrichteelement 43 weist mindestens zwei in Umfangsrichtung der Spannrolle 7 versetzt zueinander angeordnete Ausrichteflächen 44, 44' auf. Auf diese Weise wird eine sichere Abstützung in einer zur Drehachse A5 senkrechten Ebene erreicht. Ferner weist das Ausrichteelement 43 mindestens zwei in axiale Richtung der Spannrolle 7 versetzt zueinander angeordnete Ausrichteflächen 44, 45 auf. Auf diese Weise wird eine sichere Abstützung in einer zur Drehachse A5 parallelen Ebene erreicht.

Figur 8 zeigt eine erfindungsgemäße Einstellvorrichtung 40 zum Einstellen einer erfindungsgemäßen Spannanordnung 2 gemäß einer der Figuren 1 bis 4, in einer zweiten Ausführungsform. Die Einstellvorrichtung 40 dient zum Einstellen des Schwenkwinkels α für eine Spannanordnung 2, bei welcher eine oder zwei Spannrollen 5, 7 mittels eines entsprechenden Einstellmechanismus 11 einstellbar sind. Die vorliegende Einstellvorrichtung 40 entspricht weitestgehend der Ausführungsform gemäß Figur 7, auf deren Beschreibung hinsichtlich der Gemeinsamkeiten abkürzend Bezug genommen wird. Dabei sind gleiche beziehungsweise abgewandelte Einzelheiten mit gleichen Bezugszeichen versehen, wie in Figur 7.

Eine Besonderheit der vorliegenden Ausführungsform nach Figur 8 ist, dass diese zwei Ausrichteelemente 43, 43' aufweist, die gegeneinander um eine Schwenkachse schwenkbar sind. Die Ausrichteelemente 43, 43' der Einstellvorrichtung 40 können individuell oder gemeinsam in die für die jeweils gewünschte Schwenkposition der Spannrollen 5, 7 erforderliche Lage eingestellt werden, beziehungsweise einer hierfür passenden Ausgestaltung bereitgestellt werden. Durch Aufsetzen der Spannanordnung 2 auf der Halteeinrichtung 42 und Anlegen der Spannrollen 5, 7 gegen die Ausrichteflächen 44, 45 unter Federvorspannung werden die Spannrollen 5, 7 in die gewünschten Positionen verschwenkt. Durch anschließendes Verspannen der Spannrolle 5, 7 am jeweiligen Trägerelement 12, 13 mittels des Spannelements 19 beziehungsweise Mutter wird die Anordnung in den gewünschten Schwenkpositionen fixiert.

Figur 9 zeigt eine erfindungsgemäße Einstellvorrichtung zum Einstellen einer erfindungsgemäßen Spannanordnung 2 gemäß Figur 5, die nur einen Spannarm 4 aufweist. Aufbau und Funktionsweise der vorliegenden Einstellvorrichtung 40 gemäß Figur 9 entsprechen weitestgehend der Ausführungsform gemäß Figur 7, auf deren Beschreibung abkürzend verwiesen wird. Dabei sind gleiche beziehungsweise abgewandelte Einzelheiten mit gleichen Bezugszeichen versehen, wie in Figur 7. Entsprechend der Ausgestaltung des Einarmspanners gemäß Figur 5, ist das Ausrichteelement 43 der Einstellvorrichtung 40 gemäß Figur 9 entsprechend größer ausgebildet, so dass die Spannrolle 5 gegen die Ausrichteflächen 44, 45 des Ausrichteelements 43 in Anlage beziehungsweise in die gewünschte Schwenkposition gebracht werden kann.

Ein Vorteil der Spannanordnungen 2 beziehungsweise der Einstellvorrichtungen 40 liegt darin, dass die Lager 16 der Spannrollen 5, 7 und dementsprechend auch die jeweilige Spannrolle relativ zum Trägerelement 12, 13 in eine gewünschte Position eingestellt werden kann. Es kann auf einfache und kostengünstige Weise ein definierter Schiefstand der Spannrolle 5, 7 relativ zum Träger 12, 13 beziehungsweise Grundkörper 3 erreicht werden, welcher auch null betragen kann.

### Bezugszeichenliste

- 2: Spannanordnung
- 3: Grundkörper
- 4: erster Spannarm
- 5: erste Spannrolle
- 6: zweiter Spannarm
- 7: zweite Spannrolle
- 8: Feder
- 9: Federabstützung
- 10: Federabstützung
- 11: Einstellmechanismus
- 12: Trägerabschnitt
- 13: Trägerabschnitt
- 14: Lagerabschnitt
- 15: Lagerabschnitt
- 16: Lager
- 17: Lagerträger
- 18: Stützelement
- 19: Spannelement
- 20: Lagerinnenring
- 21: Bohrung
- 22: Spannmutter
- 23: Fläche
- 24: Fläche
- 25: Fläche
- 26: Fläche
- 27: Kopfabschnitt
- 28: Eingriffskontur
- 29: Innengewinde
- 30: Zylinderabschnitt
- 31: Kopfabschnitt
- 32: Riementrieb
- 33: Aggregat
- 34: Riemen
- 35: Riemenscheibe
- 36: Riemenscheibe
- 37: Riemenscheibe
- 38: Riemen

- 40: Einstellvorrichtung
- 41: Basisplatte
- 42: Halteinrichtung
- 43: Ausrichteelement
- 44: Ausrichtefläche
- 45: Ausrichtefläche
- 46: Befestigungselement
- 47: Öffnung

- α: Winkel
- β: Winkel
- A: Achse
- C: Lagermittelpunkt
- L: Länge
- M: Schwenkmittelpunkt
- P: Position
- R: Radius

## Patentansprüche

1. Spannanordnung für einen Zugmitteltrieb, umfassend:
einen Grundkörper (3);
zumindest einen Spannarm (4, 6), der relativ zum Grundkörper (3) um eine Schwenkachse (A4, A6) schwenkbar gelagert ist;
eine Spannrolle (5, 6), die mittels eines Lagers (16) um eine Drehachse (A5, A6) drehbar mit einem Trägerelement (12, 13) des zumindest einen Spannarms (4, 6) verbunden ist;
**gekennzeichnet durch** einen Einstellmechanismus (11), der ausgestaltet ist, das Lager (16) relativ zum Trägerelement (12, 13) in einem Schwenkbereich (α) zu verschwenken und in einer Schwenkposition (P) innerhalb des Schwenkbereichs (α) zu fixieren.

2. Spannanordnung nach Anspruch 1,
**dadurch gekennzeichnet,**
**dass** das Lager (16) relativ zum Trägerelement (12, 13) in einem Schwenkbereich (α) von bis zu ± 1° um eine Achse (A12, A13) des Trägerelements (12, 13) schwenkbar ist.

3. Spannanordnung nach einem der Ansprüche 1 oder 2,
**dadurch gekennzeichnet,**
**dass** der Einstellmechanismus (11) eine Lageraufnahme (17) aufweist, in der das Lager (16) aufgenommen ist, ein Stützelement (18), gegen welche die Lageraufnahme (17) axial abgestützt ist, und ein Spannelement (19) zum Verspannen der Lageraufnahme (17) gegen das Stützelement (18), wobei die Lageraufnahme (17) - in unverspanntem Zustand des Spannelements (19) - relativ zum Stützelement (18) verschwenkbar ist, und durch Verspannen mittels des Spannelements (19) relativ zum Stützelement (18) fixierbar ist.

4. Spannanordnung nach Anspruch 3,
**dadurch gekennzeichnet,**
**dass** die Lageraufnahme (17) eine Kontaktfläche (23) aufweist, die mit einer Stützfläche (24) des Stützelements (18) in Anlage ist, wobei zumindest eine von der Kontaktfläche (23) und der Stützfläche (24) kugelig ausgebildet ist.

5. Spannanordnung nach einem der Ansprüche 3 oder 4,
**dadurch gekennzeichnet,**
**dass** die Lageraufnahme (17) eine Druckfläche (25) aufweist, die mit einer Spannfläche (26) des Spannelements (19) in Anlage ist, wobei zumindest eine von der Druckfläche (25) und der Spannfläche (26) kugelig ausgebildet ist.

6. Spannanordnung nach einem der Ansprüche 1 bis 5,
**dadurch gekennzeichnet,**
**dass** das Lager (16) relativ zum Trägerelement (12, 13) um einen Drehpunkt (M) schwenkbar ist, der innerhalb der axialen Erstreckung (L16) des Lagers (16) liegt.

7. Spannanordnung nach einem der Ansprüche 4 bis 6,
**dadurch gekennzeichnet,**
**dass** ein Radius (R) der kugeligen Fläche (23, 24, 25, 26) kleiner ist, als ein größter Außenradius (R5, R6) der Spannrolle (5, 6), insbesondere kleiner als ein größter Außenradius des Lagers (16).

8. Spannanordnung nach einem der Ansprüche 1 bis 5,
**dadurch gekennzeichnet,**
**dass** das Lager (16) relativ zum Trägerelement (12, 13) um einen Drehpunkt (M) schwenkbar ist, der außerhalb der axialen Erstreckung (L16) des Lagers (16) liegt, insbesondere auf einer in Bezug auf eine Lagermittelebene (E) zum Grundkörper (3) entgegengesetzten Seite.

9. Spannanordnung nach Anspruch 8,
**dadurch gekennzeichnet,**
**dass** ein Radius (R) der kugeligen Fläche (23, 24, 25, 26) größer ist, als ein größter Außenradius (R16) des Lagers (16), insbesondere größer als ein größter Außenradius der Spannrolle (5, 6).

10. Spannanordnung nach einem der Ansprüche 1 bis 9,
**dadurch gekennzeichnet,**
**dass** die Lageraufnahme (17) zweiteilig gestaltet ist, und ein erstes Lageraufnahmeteil (17A) aufweist, welches das Lager (16) an einem ersten axialen Ende aufnimmt, und ein zweites Lageraufnahmeteil (17B), welches das Lager (16) an einem zweiten axialen Ende aufnimmt, wobei das erste Lageraufnahmeteil (17A) und das zweite Lageraufnahmeteil (17B) mittels des Spannelements (19) axial gegeneinander verspannbar sind.

11. Spannanordnung nach einem der Ansprüche 1 bis 10,
**dadurch gekennzeichnet,**
**dass** die Lageraufnahme (17) eine zentrale Bohrung (21) aufweist, durch welche sich das Spannelement (19) hindurch erstreckt, wobei das Spannelement (19) gegenüber einer Bohrungswandung Radialspiel (sA, sB) aufweist.

12. Spannanordnung nach einem der Ansprüche 1 bis 11,
**dadurch gekennzeichnet,**
**dass** das Spannelement (18) einen Kopfabschnitt (27) aufweist, welcher die Spannfläche (26) bildet, und einen Zylinderabschnitt (30), der sich in die Lageraufnahme (17) hineinerstreckt.

13. Spannanordnung nach einem der Ansprüche 1 bis 12,
**dadurch gekennzeichnet,**
**dass** eines von dem Spannelement (19) und einem Gegenelement (22) in Form einer Schraube mit einem Außengewinde gestaltet ist, und das andere von dem Spannelement (19) und dem Gegenelement (22) in Form einer Mutter mit einem passenden Innengewinde gestaltet ist.

14. Vorrichtung zum Einstellen einer Spannanordnung nach einem der Ansprüche 1 bis 13,
eine Basisplatte (41),
eine Halteinrichtung (42) zum Fixieren der Spannanordnung (2) an der Basisplatte (41),
ein Ausrichteelement (43), die mit der Basisplatte (41) verbunden ist und mindestens eine Ausrichtefläche (44, 45) aufweist, gegen welche die Spannrolle (5, 7) in aufgespanntem Zustand der Spannanordnung (2) in Anlage bringbar ist.

15. Vorrichtung nach Anspruch 14,
**dadurch gekennzeichnet,**
**dass** das Ausrichteelement (43) mindestens zwei in Umfangsrichtung der Spannrolle (5, 7) versetzt zueinander angeordnete Ausrichteflächen (44, 45) aufweist,
und/oder
**dass** das Ausrichteelement (43) mindestens zwei in axiale Richtung der Spannrolle (5, 7) versetzt zueinander angeordnete Ausrichteflächen (44, 45) aufweist.
